# FASCICULE DE BREVET EUROPEEN

(11) **EP 0 752 746 B1**
(45) Date de publication et mention de la délivrance du brevet: **06.05.1999**
(21) Numéro de dépôt: 96401449.2
(22) Date de dépôt: 01.07.1996
(51) Int. Cl.: H02G 3/10, H02G 3/20

(54) **Procédé pour moduler l'amplitude d'une ouverture sur un accessoire pour canalisation(s) électrique(s) et accessoire pour canalisation(s) électrique(s) auquel est appliqué un tel procédé**
Verfahren zur Modulation der Öffnungsgrösse eines Zubehör für Elektrokanal und Zubehör dafür
Process for modifying the size of an opening in an accessory for electrical ducts and associated accessory

(30) Priorité: 03.07.1995 FR 9507983
(43) Date de publication de la demande: 08.01.1997
(73) Titulaire: LEGRAND, F-87000 Limoges (FR); LEGRAND SNC, F-87000 Limoges (FR)
(72) Inventeur: Jadaud, Alain, 72240 Tennie (FR)
(74) Mandataire: CABINET BONNET-THIRION

(56) Documents cités:
- EP-A- 0 239 456
- DE-A- 2 349 766
- DE-U- 8 527 566

## Description

La présente invention concerne d'une manière générale les accessoires électriques dans lesquels doit être engagée au moins une canalisation électrique.

Il s'agit, par exemple, des boîtiers de recouvrement, communément appelés "points de centre", du type de ceux mis en oeuvre pour la fixation d'un quelconque appareillage électrique, un luminaire ou un détecteur de fumée par exemple, lorsque la canalisation électrique servant de logement aux conducteurs électriques nécessaires à la desserte de cet appareillage électrique est rapportée en saillie sur le support sur lequel est lui-même appliqué un tel boîtier de recouvrement.

Dans ce cas, seule se trouve mise en oeuvre une canalisation électrique.

Mais, dans tous les cas, l'un des problèmes à surmonter dans la réalisation des accessoires pour canalisation(s) électrique(s) de ce type tient au fait que, suivant les installations, la ou les canalisations électriques à prendre en considération peuvent avoir des dimensions différentes.

Par exemple, s'il s'agit de goulottes de section transversale globalement rectangulaire, leur largeur et/ou leur hauteur peuvent être variables.

Or il importe que l'ouverture d'accès que présente un accessoire pour l'engagement d'une telle canalisation électrique ait des dimensions adaptées à celles de cette dernière.

A défaut, il subsisterait, au moins localement, entre cette ouverture d'accès et la canalisation électrique, un certain interstice, préjudiciable tant à l'esthétique qu'à la sécurité.

Pour chaque accessoire pour canalisation(s) électrique(s), il faut donc prévoir, à ce jour, au détriment des coûts, autant de fabrications différentes qu'il y a de canalisations électriques susceptibles d'être mises en oeuvre.

La présente invention a d'une manière générale pour objet une disposition qui, en permettant de moduler à la demande l'amplitude d'une ouverture d'accès sur un accessoire pour canalisation(s) électrique(s), conduit avantageusement à une simplification des fabrications.

De manière plus précise, elle a tout d'abord pour objet un procédé pour moduler l'amplitude d'une ouverture d'accès sur un accessoire pour canalisation(s) électrique(s) et ainsi ajuster cette ouverture d'accès aux dimensions d'une telle canalisation électrique, ce procédé étant d'une manière générale caractérisé en ce qu'il consiste à prévoir, sur cet accessoire, au moins deux pièces, dites ci-après par simple commodité pièces de modulation, qui, emboîtées l'une à l'autre, et montées rotatives l'une par rapport à l'autre autour d'un axe de rotation relatif, comportent, chacune, de manière sensiblement complémentaire, d'une part, une paroi frontale, qui s'étend sensiblement transversalement par rapport à leur axe de rotation relatif, et, d'autre part, une paroi latérale, qui fait globalement un angle avec la paroi frontale, l'ouverture d'accès recherchée résultant de la superposition d'une ouverture sur la paroi latérale de la pièce de modulation intérieure avec une ouverture sur la paroi latérale de la pièce de modulation extérieure.

Certes, il est connu, par des réalisations antérieures, un boîtier de connexion ou de dérivation formé de deux pièces emboîtées l'une dans l'autre et montées rotatives l'une par rapport à l'autre autour d'un axe de rotation relatif, chacune de ces deux pièces comportant, de manière sensiblement complémentaire, d'une part, une paroi frontale, qui s'étend sensiblement transversalement par rapport à leur axe de rotation relatif, et, d'autre part, une paroi latérale, qui fait globalement un angle, en l'espèce un angle droit, avec la paroi frontale, avec, sur la paroi latérale de la pièce la plus externe, une pluralité d'ouvertures d'accès que la paroi latérale de la pièce la plus interne, fragmentée en conséquence, occulte ou démasque suivant sa position angulaire par rapport à la pièce la plus externe.

Mais, outre que l'ensemble intervient par coïncidence, suivant des positions angulaires préétablies, et sans donc qu'une quelconque modulation de l'amplitude de la ou des ouvertures d'accès laissées libres soit prévue, les parois latérales des deux pièces s'étendent l'une vers l'autre, c'est-à-dire en sens opposés l'une par rapport à l'autre, à compter des parois frontales, en sorte que les ouvertures d'accès qu'elles délimitent s'étendent en pleine surface, à distance de l'une et de l'autre des parois frontales.

Une telle disposition ne convient donc pas pour un accessoire pour canalisation(s) électrique(s) pour lequel, comme précédemment indiqué, une canalisation électrique à engager doit être appliquée en saillie sur le support sur lequel se trouve lui-même appliqué cet accessoire, en étant dûment plaquée sur ce support.

Il en est de même avec le modèle d'utilité allemand No 85 27 566, par lequel il est connu de moduler une ouverture d'accès, mais pour des câbles pouvant avoir différentes dimensions, et non pour des canalisations électriques.

En outre, dans ce modèle d'utilité allemand, cette ouverture d'accès est disposée sur la partie frontale du boîtier concerné, et non pas sur sa partie latérale.

La présente invention a encore pour objet un accessoire pour canalisation(s) électrique(s), qui, en mettant en oeuvre le procédé précédent, permet à une telle canalisation électrique d'être appliquée en saillie sur le support sur lequel se trouve lui-même appliqué cet accessoire.

Cet accessoire pour canalisation(s) électrique(s) est du genre destiné à être appliqué contre un quelconque support et comportant au moins deux pièces, dites ici par simple commodité pièces de modulation, emboîtées l'une dans l'autre, et montées rotatives l'une par rapport à l'autre autour d'un axe de rotation relatif, chacune de ces deux pièces comportant, de manière sensiblement complémentaire, d'une part, une paroi frontale, qui s'étend sensiblement transversalement par rapport à leur axe de rotation relatif, et, d'autre part, une paroi latérale, qui fait globalement un angle avec la paroi frontale, et il est d'une manière générale caractérisé en ce que, la paroi latérale de la pièce de modulation intérieure comportant au moins une ouverture et la paroi latérale de la pièce de modulation extérieure comportant une ouverture qui est à superposer à une ouverture de la paroi latérale de la pièce de modulation intérieure pour délimiter globalement au moins une ouverture d'accès propre à l'engagement d'une canalisation électrique, les parois latérales des deux pièces de modulation s'étendent l'une et l'autre dans le même sens à compter de leurs parois frontales, et l'ouverture d'accès que délimitent ces deux pièces de modulation s'étend axialement jusqu'à la tranche de leurs parois latérales.

Les objets de l'invention, leurs caractéristiques et leurs avantages ressortiront d'ailleurs de la description qui va suivre, à titre d'exemple, en référence aux dessins schématiques annexés sur lesquels :
la figure 1 est une vue en perspective d'un accessoire pour canalisation électrique suivant l'invention ;
la figure 2 en est, à échelle supérieure, une vue en perspective éclatée ;
la figure 3 en est, à échelle encore supérieure, une vue en coupe axiale, suivant la ligne III-III de la figure 1 ;
la figure 4 est, à l'échelle de la figure 3, une vue en coupe axiale d'un des constituants de cet accessoire, suivant la ligne brisée IV-IV de la figure 2 ;
la figure 5 est, à la même échelle, une vue en coupe axiale d'un autre constituant de cet accessoire, suivant la ligne V-V de la figure 2 ;
la figure 6 est, à la même échelle, une vue en coupe axiale d'un autre constituant de l'accessoire suivant l'invention, suivant la ligne VI-VI de la figure 2 ;
la figure 7 est, à la même échelle, une vue en coupe axiale d'un autre constituant de cet accessoire, suivant la ligne brisée VII-VII de la figure 2 ;
la figure 8 reprend, à échelle supérieure, le détail de la figure 3 repéré par un encart VIII sur cette figure 3 ;
la figure 9 est une autre vue partielle en coupe axiale de l'accessoire suivant l'invention, suivant la ligne IX-IX de la figure 1.
la figure 10 est une vue de côté du constituant représenté à la figure 2, suivant la flèche X de cette figure 2 ;
la figure 11 est une vue partielle en coupe axiale de ce constituant, suivant la ligne brisée XI-XI de la figure 2 ;
les figures 12 et 13 sont des vues partielles en coupe axiale du constituant représenté sur la figure 5, suivant, chacune respectivement, les lignes XII-XII et XIII-XIII de la figure 2.

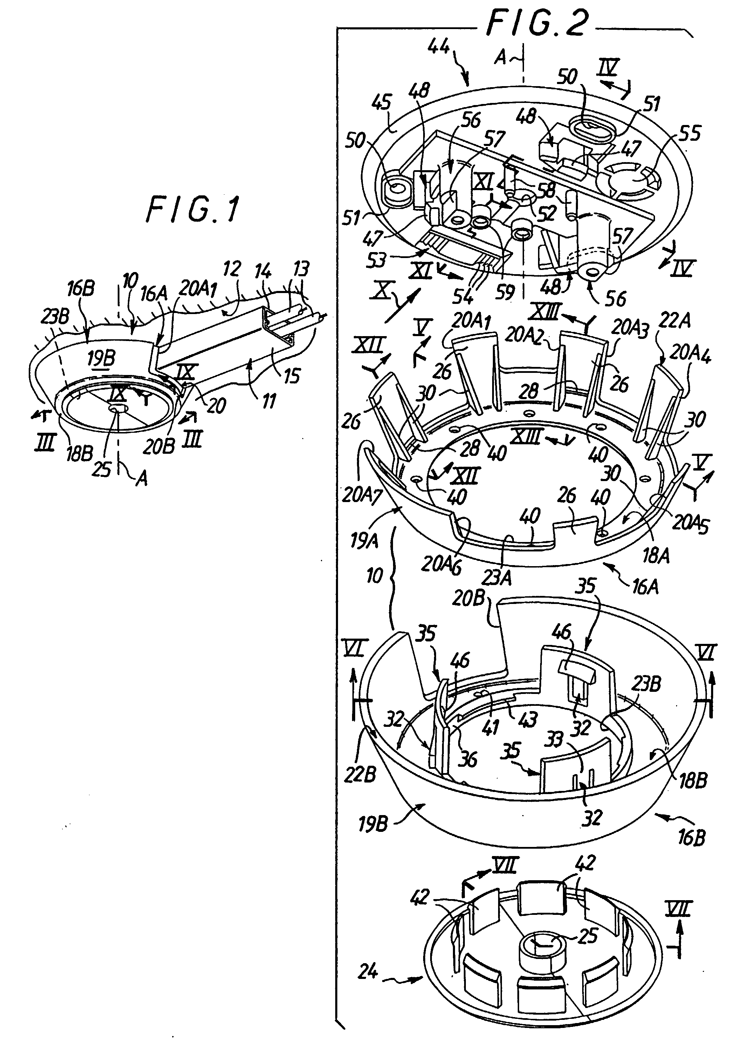

Les figures 1 à 13 illustrent, à titre d'exemple, l'application de l'invention à un accessoire 10, pour canalisation électrique 11, du type de ceux qui, communément dits "points de centre", constituent en pratique un boîtier de recouvrement à placer autour de la fixation d'un quelconque appareillage électrique, et, par exemple, d'un luminaire, non représenté, à la racine de cette fixation.

Dans la forme de réalisation représentée, le luminaire est supposé être suspendu à un plafond, et l'accessoire 10 est donc destiné à être appliqué au support 12 que constitue ce plafond, autour de la "suspension" correspondante, à la racine de celle-ci.

La canalisation électrique 11 est elle-même destinée à être rapportée en saillie sur le support 12.

Dans la forme de réalisation représentée, cette canalisation électrique 11 est constituée par une goulotte qui, pour le logement de conducteurs électriques 13, comporte, suivant une section transversale globalement rectangulaire, un corps 14, dont le profil est en U, et un couvercle 15, qui est rapporté, par exemple, par simple encliquetage, sur le corps 14, et dont le profil est par exemple lui aussi en U, comme représenté.

Les dispositions correspondantes ne relevant pas de la présente invention, elles ne seront pas décrites plus en détail ici.

D'une manière générale, l'accessoire 10 comporte au moins deux pièces 16A, 16B, dites ici par simple commodité pièces de modulation, qui, emboîtées l'une dans l'autre, suivant des dispositions décrites plus en détail ultérieurement, sont montées rotatives l'une par rapport à l'autre autour d'un axe de rotation relatif A.

Cet axe de rotation relatif A, qui est schématisé en traits interrompus sur les figures, s'étend sensiblement perpendiculairement au support 12.

Chacune des deux pièces de modulation 16A, 16B comporte, de manière sensiblement complémentaire, d'une part, une paroi frontale 18A, 18B, qui s'étend sensiblement transversalement par rapport à leur axe de rotation relatif A, et, d'autre part, une paroi latérale 19A, 19B, qui fait globalement un angle avec la paroi frontale 18A, 18B, et les parois latérales 19A, 19B des deux pièces de modulation 16A, 16B sont conformées de manière à pouvoir délimiter globalement, suivant des dispositions qui seront également décrites plus en détail ultérieurement, au moins une ouverture d'accès 20 propre à l'engagement de la canalisation électrique 11.

S'agissant, comme indiqué, d'un boîtier de recouvrement pour fixation de luminaire, seule une ouverture d'accès 20 est prévue, et celle-ci a globalement un contour quadrangulaire, à l'image de la section transversale de la canalisation électrique 11.

Conjointement, seules deux pièces de modulation 16A, 16B sont en outre prévues dans ce cas, et l'une et l'autre ont un contour circulaire.

Suivant l'invention, les parois latérales 19A, 19B des deux pièces de modulation 16A, 16B s'étendent l'une et l'autre dans le même sens à compter de leurs parois frontales 18A, 18B, et l'ouverture d'accès 20 que délimitent ces deux pièces de modulation 16A, 16B s'étend, en l'espèce axialement, c'est-à-dire parallèlement à l'axe de rotation relatif A, jusqu'à la tranche 22A, 22B de leurs parois latérales 19A, 19B, en sorte que les concavités de ces deux pièces de modulation 16A, 16B sont elles-mêmes orientées dans le même sens, en direction, en l'espèce, du support 12, et que l'une de ces pièces de modulation 16A, 16B, dite ci-après pièce de modulation intérieure, en l'espèce la pièce de modulation 16A, se trouve globalement à l'intérieur de l'autre, dite ci-après pièce de modulation extérieure, en l'espèce la pièce de modulation 16B.

En pratique, les parois frontales 18A, 18B des deux pièces de modulation 16A, 16B entourent, au moins localement, leur axe de rotation relatif A, et leurs parois latérales 19A, 19B s'étendent en tout point à distance de celui-ci.

Pour le passage de la suspente, non représentée, du luminaire, aussi bien d'ailleurs que pour le passage des conducteurs électriques 13 nécessaires à la desserte de celui-ci, la paroi frontale 18A, 18B de l'une et de l'autre des deux pièces de modulation 16A, 16B comporte, dans sa zone centrale, une ouverture circulaire, 23A, 23B, centrée sur l'axe de rotation relatif A.

Dans la forme de réalisation représentée, cette ouverture circulaire 23A, 23B est relativement étendue, et il est associé, aux deux pièces de modulation 16A, 16B, suivant des dispositions qui seront décrites plus en détail ultérieurement, un obturateur 24, qui est apte à être rapporté sur la pièce de modulation 16B extérieure, à la faveur de l'ouverture circulaire 23B de sa paroi frontale 18B, et qui, pour le passage proprement dit de la suspente du luminaire et des conducteurs électriques 13, présente, lui-même, dans sa zone centrale, une ouverture 25 d'extension largement plus réduite.

La pièce de modulation 16B extérieure, au moins, s'étend circulairement sur 360° autour de l'axe de rotation relatif A, et, tandis que la paroi latérale 19A de la pièce de modulation 16A intérieure comporte, réparties circulairement, au moins deux ouvertures 20A1, 20A2 etc... de dimensions différentes, la paroi latérale 19B de la pièce de modulation 16B extérieure ne comporte qu'une seule ouverture 20B de dimensions globalement au moins égales à celles de l'ouverture 20A1, 20A2 etc... de plus grandes dimensions de la paroi latérale 19A de la pièce de modulation 16A intérieure.

Les bords latéraux des ouvertures 20A1, 20A2 etc... de la pièce de modulation 16A intérieure sont parallèles entre eux, en s'étendant parallèlement au rayon moyen de l'ensemble qu'ils encadrent, et il en est de même des bords latéraux de l'ouverture 20B de la pièce de modulation 16B extérieure.

L'ouverture d'accès 20 recherchée résulte de la superposition d'une quelconque des ouvertures 20A1, 20A2 etc... de la pièce de modulation 16A intérieure avec l'ouverture 20B de la pièce de modulation 16B extérieure, avec, éventuellement, une modulation de sa largeur et/ou de sa hauteur par cette dernière.

Dans la forme de réalisation représentée, la pièce de modulation 16A intérieure s'étend aussi circulairement sur 360° autour de l'axe de rotation relatif A de l'ensemble, et sa paroi latérale 19A comporte, à titre d'exemple, sept ouvertures 20A1, 20A2, 20A3, 20A4, 20A5, 20A6, 20A7.

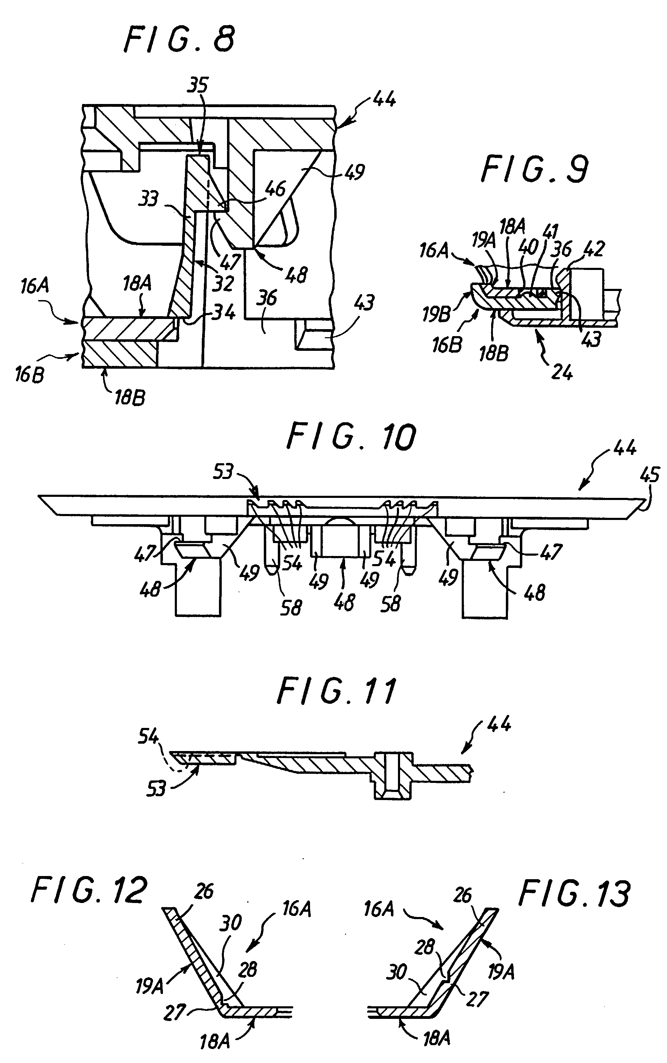

En bordure de l'une au moins de ces ouvertures 20A1, 20A2 etc..., la paroi latérale 19A de la pièce de modulation 16A intérieure comporte localement une portion sécable 26, qui, ainsi qu'il est mieux visible sur les figures 12 et 13, se trouve délimitée par une zone de moindre épaisseur 27 résultant d'une saignée 28 affectant la surface interne de cette paroi latérale 19A, et qui, ainsi qu'il est aisé de le comprendre, permet, à la demande, d'accroître si nécessaire l'amplitude en largeur, et/ou en hauteur, de l'ouverture 20A1, 20A2 etc... concernée.

Le long des bords latéraux des ouvertures 20A1, 20A2 etc... de sa paroi latérale 19A, la pièce de modulation 16A intérieure présente, par ailleurs, dans la forme de réalisation représentée, en saillie sur la surface interne de cette paroi latérale 19A, des nervures de raidissements 30, qui, de contour globalement triangulaire, relient cette paroi latérale 19A à la paroi frontale 18A.

Par sa surface externe, la pièce de modulation 16A intérieure est au moins localement au contact de la surface interne de la pièce de modulation 16B extérieure.

Dans la forme de réalisation représentée, la surface externe de la pièce de modulation 16A intérieure est lisse, il en est de même de la surface interne de la pièce de modulation 16B extérieure, et ces deux pièces de modulation 16A, 16B sont au contact l'une de l'autre en tout point de la surface externe de la pièce de modulation 16A intérieure.

Autrement dit, les deux pièces de modulation 16A, 16B ont globalement des formes complémentaires.

Dans la forme de réalisation représentée, la paroi frontale 18A, 18B des pièces de modulation 16A, 16B est plate, et elle s'étend sensiblement perpendiculairement à l'axe de rotation relatif A de l'ensemble.

Conjointement, dans cette forme de réalisation, la paroi latérale 19A, 19B des pièces de modulation 16A, 16B fait avec la paroi frontale 18A, 18B un angle supérieur à 90°.

Autrement dit, cette paroi latérale 19A, 19B est globalement tronconique.

Les deux pièces de modulation 16A, 16B ont donc chacune globalement une forme de coupe, ou de cloche renversée.

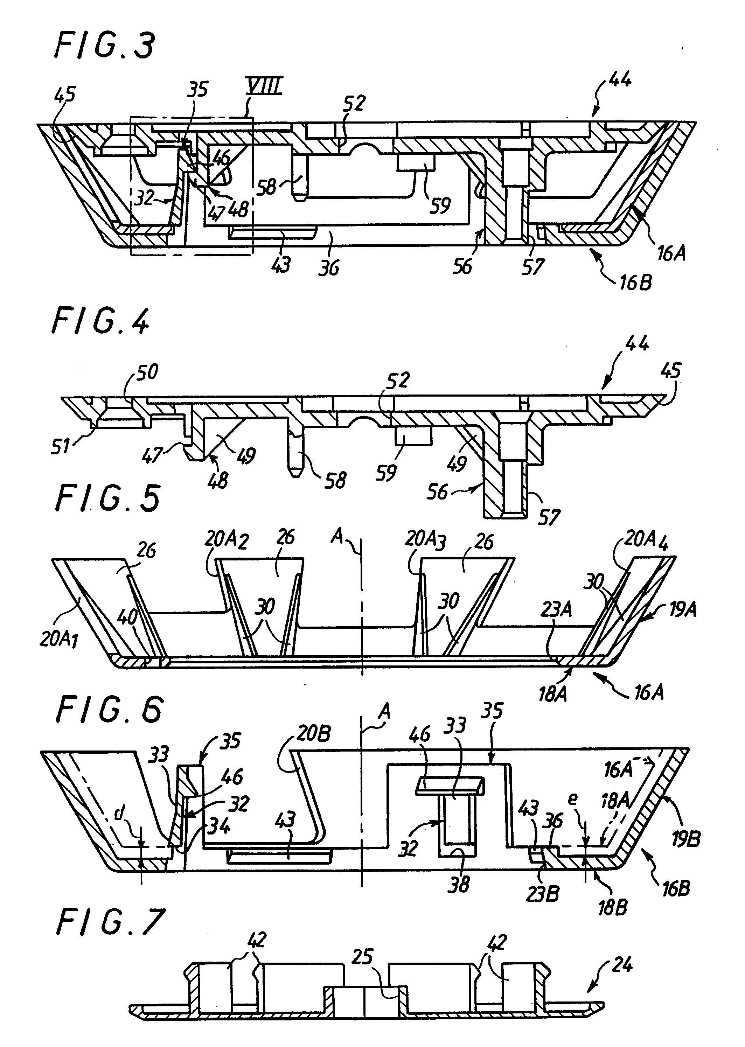

Préférentiellement, et c'est le cas dans la forme de réalisation représentée, il est prévu, entre les deux pièces de modulation 16A, 16B, des moyens d'assujettissement débrayables, en sorte que, tel que schématisé en traits interrompus sur la figure 6, ces deux pièces de modulation 16A, 16B peuvent avantageusement former conjointement un sous-ensemble unitaire 31.

Dans la forme de réalisation représentée, ces moyens d'assujettissement débrayables sont des moyens d'encliquetage.

En pratique, ces moyens d'encliquetage comportent, sur la pièce de modulation 16B extérieure, au moins deux pattes élastiquement déformables 32, qui, issues chacune d'une racine 33 éloignée de la paroi frontale 18B, sont dirigées vers cette paroi frontale 18B, et dont la tranche d'extrémité 34 est à une distance d de la paroi frontale 18B sensiblement égale à l'épaisseur e de la paroi frontale 18A de la pièce de modulation 16A intérieure, tout en étant légèrement supérieure à cette épaisseur e.

Ainsi, la pièce de modulation 16A intérieure peut être engagée par sa paroi frontale 18A sous les pattes élastiquement déformables 32 de la pièce de modulation 16B extérieure, tel que représenté sur la figure 3, et tel que schématisé sur la figure 6.

En pratique, dans la forme de réalisation représentée, chacune des pattes élastiquement déformables 32 de la pièce de modulation 16B extérieure appartient à un jambage 35 que cette pièce de modulation 16B extérieure présente en bordure de l'ouverture circulaire 23B de sa paroi frontale 18B, ce jambage 35 s'étend parallèlement à l'axe de rotation relatif A de l'ensemble à compter d'une collerette 36 entourant en continu cette ouverture circulaire 23B, et il présente, localement, une saignée en U 38 à la faveur de laquelle est isolée la patte élastiquement déformable 32 qu'il forme.

En pratique, également, trois jambages 35 sont prévus, en étant régulièrement répartis circulairement à 120° deux à deux autour de l'axe de rotation relatif A, et, donc, aussi, trois pattes élastiquement déformables 32.

Pour faciliter l'engagement de la pièce de modulation 16A intérieure dans la pièce de modulation 16B extérieure, la surface interne des pattes élastiquement déformables 32, c'est-à-dire la surface de ces pattes élastiquement déformables 32 tournée du côté opposé à l'axe de rotation relatif A, s'étend en oblique par rapport à cet axe de rotation relatif A.

Lorsque, par sa paroi frontale 18A, la pièce de modulation 16A intérieure est en prise avec les pattes élastiquement déformables 32 de la pièce de modulation 16B extérieure, les parois latérales 19A, 19B des pièces de modulation 16A, 16B s'étendent à un même niveau.

Préférentiellement, et c'est le cas dans la forme de réalisation représentée, il est prévu, entre les deux pièces de modulation 16A, 16B, des moyens d'indexation angulaire.

En pratique, ces moyens d'indexation angulaire comportent, sur la paroi frontale 18A de la pièce de modulation 16A intérieure, une pluralité d'évidements 40, qui sont régulièrement répartis circulairement autour de l'axe de rotation relatif A, et, en saillie sur la paroi frontale 18B de la pièce de modulation 16B extérieure, un bossage 41, avec lequel peut venir en prise l'un quelconque des évidements 40 précédents.

Dans la forme de réalisation représentée, l'obturateur 24 est en deux parties, suivant des dispositions faisant l'objet du brevet français, qui, déposé le 4 juillet 1990 sous le No 90 08455, a été publié sous le No 2 664 365.

Ces dispositions étant bien connues par elles-mêmes, elles ne seront pas décrites ici.

Il suffira d'indiquer que cet obturateur 24 comporte, en saillie, de place en place, une pluralité de pattes élastiquement déformables 42, qui, réparties circulairement autour de l'axe de rotation relatif A, sont globalement conformées en crochet, et qui sont destinées à venir en prise avec des crans 43 prévus à cet effet sur la pièce de modulation 16B extérieure.

En pratique, ces crans 43 s'étendent radialement en saillie en direction de l'axe de rotation relatif A sur la collerette 36 bordant l'ouverture circulaire 23B de la paroi frontale 18B de cette pièce de modulation 16B extérieure, le long du bord libre de cette collerette 36, entre les jambages 35.

Dans la forme de réalisation représentée, il est associé, aux deux pièces de modulation 16A, 16B, une platine de fixation 44, qui est apte à pouvoir être rapportée sur un support, et, donc, en l'espèce, le support 12, et sur laquelle la pièce de modulation 16B extérieure est elle-même apte à être rapportée de manière amovible.

En pratique, cette platine de fixation 44 a, à sa périphérie, un contour circulaire, à l'image de celui des pièces de modulation 16A, 16B, et, lorsque ces pièces de modulation 16A, 16B sont en place, elle est entièrement circonscrite par celles-ci.

Pour ce faire, sa tranche est biseautée par un chanfrein 45.

En pratique, également, il est prévu, entre la pièce de modulation 16B extérieure et la platine de fixation 44, pour la fixation sur celle-ci des pièces de modulation 16A, 16B, des moyens d'encliquetage.

Dans la forme de réalisation représentée, ces moyens d'encliquetage comportent, sur la pièce de modulation 16B extérieure, au moins deux crans 46, et, sur la platine de fixation 44, un nombre égal de crans 47 aptes à coopérer en accrochage avec les précédents.

En pratique, les crans 46 de la pièce de modulation 16B extérieure sont au nombre de trois, à raison d'un par jambage 35, et ils font saillie sur la surface externe de ces jambages 35, c'est-à-dire sur la surface de ces jambages 35 tournée du côté de l'axe de rotation relatif A, au-dessus du niveau de la racine 33 des pattes élastiquement déformables 32.

Quant aux crans 47 de la platine de fixation 44, ils font saillie sur des piliers 48 dûment prévus en saillie à cet effet sur cette platine de fixation 44.

Dans la forme de réalisation représentée, ces piliers 48 sont renforcés par des nervures 49 à leur dos.

Pour sa fixation au support 12, la platine de fixation 44 présente au moins un perçage 50, pour le passage d'un quelconque moyen de fixation, une vis par exemple, non représenté.

Dans la forme de réalisation représentée, trois perçages 50 sont prévus, qui sont régulièrement répartis circulairement, et qui, en pratique, sont chacun entourés par une collerette 51 allongée en boutonnière.

Pour le passage d'un crochet, non représenté, propre à la suspente du luminaire, la platine de fixation 44 présente, en outre, dans sa zone centrale, une ouverture 52 centrée sur l'axe de rotation relatif A des pièces de modulation 16A, 16B.

Pour l'engagement de la canalisation électrique 11, la platine de fixation 44 présente, en outre, localement, à sa périphérie, une portion prédécoupée 53, qui, par des saignées 54 parallèles le long d'un au moins de ses bords latéraux, et, en pratique, le long de chacun de ceux-ci, est modulable en largeur.

Enfin, dans la forme de réalisation représentée, la platine de fixation 44 présente, encore, une entrée défonçable 55, qui est disposée en position excentrée, deux colonnettes 56, qui sont destinées à recevoir, conjointement, si désiré, un dispositif de connexion non représenté, et qui, s'étendant jusqu'au niveau des parois frontales 18A, 18B des pièces de modulation 16A, 16B, présentent chacune un méplat 57 pour ne pas interférer avec une patte élastiquement déformable 42 de l'obturateur 24, deux plots 58, qui, disposés à distance l'un de l'autre, sont eux-mêmes destinés à recevoir, chacun individuellement, si désiré, une quelconque barrette de connexion non représentée, et deux bossages 59 pour la mise en place éventuelle d'un serre-câble non représenté.

Au montage, il est procédé tout d'abord à la mise en place de la platine de fixation 44 sur le support 12, puis à celle de la canalisation électrique 11.

Si elles ne forment pas déjà, par pré-assemblage, un sous-ensemble unitaire 31, il est procédé, ensuite, à l'encliquetage de la pièce de modulation 16A intérieure dans la pièce de modulation 16B extérieure, en conférant, par rotation, à la pièce de modulation 16A intérieure, la position angulaire nécessaire pour l'obtention de l'ouverture d'accès 20 correspondant à la canalisation électrique 11.

Il est procédé, enfin, à l'encliquetage, sur la platine de fixation 44, du sous-ensemble unitaire 31 alors constitué par les deux pièces de modulation 16A, 16B.

Lors de cet encliquetage, la canalisation électrique 11 sert de détrompeur.

En effet, par construction, les jambages 35 de la pièce de modulation 16B extérieure ont, vis-à-vis de l'ouverture 20B de la paroi latérale 19B de celle-ci, la même position angulaire que celle qu'ont les piliers 48 de la platine de fixation 44 par rapport à la portion prédécoupée 53 de cette dernière.

Après la pose du luminaire, il est procédé à la mise en place, par encliquetage, de l'obturateur 24.

Pour la dépose de l'ensemble, il suffit de retirer cet obturateur 24, et d'agir en déformation sur les jambages 35 de la pièce de modulation 16B extérieure.

Bien entendu, la présente invention ne se limite pas à la forme de réalisation décrite et représentée, mais englobe toute variante d'exécution.

En particulier, au lieu d'être en deux parties, l'obturateur peut être en une seule pièce.

En outre, il peut porter une douille dans sa zone centrale.

Il peut également être prévu des moyens de repérage pour aider à sélectionner la position angulaire relative des deux pièces de modulation l'une par rapport à l'autre en fonction des dimensions de la ou des canalisations électriques à prendre en considération.

De même, il peut être prévu des moyens de marquage pour lire de l'extérieur cette position angulaire relative, par exemple à travers une fenêtre prévue à cet effet dans la pièce de modulation extérieure.

Par ailleurs, au lieu d'être plate, la paroi frontale des pièces de modulation peut tout aussi bien être plus ou moins profilée.

De plus, au lieu d'intervenir à leur périphérie interne, les moyens d'encliquetage par lesquels ces deux pièces de modulation peuvent conjointement former un sous-ensemble unitaire peuvent aussi bien intervenir par exemple à leur périphérie externe, c'est-à-dire au niveau de la tranche de leurs parois latérales.

Enfin, à la limite, dans le cas d'un boîtier de recouvrement pour fixation de luminaire, la paroi frontale de la pièce de modulation intérieure peut être supprimée, cette pièce de modulation intérieure se réduisant alors en pratique à une couronne, ou même à une section de couronne, et sa paroi frontale se réduisant à la tranche de cette dernière.

## Revendications

1. Procédé pour moduler l'amplitude d'une ouverture d'accès sur un accessoire pour canalisation électrique et ainsi ajuster cette ouverture d'accès aux dimensions d'une telle canalisation électrique, caractérisé en ce qu'il consiste à prévoir, sur cet accessoire (10), au moins deux pièces (16A, 16B), dites ici par simple commodité pièces de modulation, qui, emboîtées l'une à l'autre, et montées rotatives l'une par rapport à l'autre autour d'un axe de rotation relatif (A), comportent, chacune, de manière sensiblement complémentaire, d'une part, une paroi frontale (18A, 18B), qui s'étend sensiblement transversalement par rapport à l'axe de rotation relatif (A), et, d'autre part, une paroi latérale (19A, 19B), qui fait globalement un angle avec la paroi frontale (18A, 18B), l'ouverture d'accès (20) recherchée résultant de la superposition d'une ouverture (20A1, 20A2 etc...) sur la paroi latérale de la pièce de modulation (16A) intérieure avec une ouverture (20B) sur la paroi latérale de la pièce de modulation (16B) extérieure.

2. Accessoire pour canalisation électrique du genre comportant au moins deux pièces (16A, 16B), dites ici par simple commodité pièces de modulation, emboîtées l'une dans l'autre et montées rotatives l'une par rapport à l'autre autour d'un axe de rotation relatif (A), chacune de ces deux pièces de modulation (16A, 16B) comportant, de manière sensiblement complémentaire, d'une part, une paroi frontale (18A, 18B), qui s'étend sensiblement transversalement par rapport à leur axe de rotation relatif (A), et, d'autre part, une paroi latérale (19A, 19B), qui fait globalement un angle avec la paroi frontale (18A, 18B), caractérisé en ce que, la paroi latérale (19A) de la pièce de modulation (16A) intérieure comportant au moins une ouverture (20A1, 20A2 etc...) et la paroi latérale (19B) de la pièce de modulation (16B) extérieure comportant une ouverture (20B) qui est à superposer à une ouverture (20A1, 20A2 etc...) de la paroi latérale (19A) de la pièce de modulation (16A) intérieure pour délimiter globalement au moins une ouverture d'accès (20) propre à l'engagement d'une canalisation électrique (11), les parois latérales (19A, 19B) des deux pièces de modulation (16A, 16B) s'étendent l'une et l'autre dans le même sens à compter de leurs parois frontales (18A, 18B), et l'ouverture d'accès (20) que délimitent ces deux pièces de modulation (16A, 16B) s'étend axialement jusqu'à la tranche de leurs dites parois latérales (19A, 19B).

3. Accessoire suivant la revendication 2, caractérisé en ce que, s'agissant d'un boîtier de recouvrement pour fixation d'appareillage électrique, la paroi frontale (18A, 18B) de l'une et de l'autre des pièces de modulation (16A, 16B) comporte une ouverture circulaire (23A, 23B), leur paroi latérale (19A, 19B) s'étend en tout point à distance de leur axe de rotation relatif (A), la pièce de modulation (16B) extérieure, au moins, s'étend circulairement sur 360° autour de cet axe de rotation relatif (A), les ouvertures (20A1, 20A2 etc...) de la paroi latérale (19A) de la pièce de modulation (16A) intérieure sont réparties circulairement et sont de dimensions différentes, et la paroi latérale (19B) de la pièce de modulation (16B) extérieure ne comporte qu'une seule ouverture (20B) de dimensions globalement au moins égales à celles de l'ouverture (20A1, 20A2 etc...) de plus grandes dimensions de la paroi latérale (19A) de la pièce de modulation (16A) intérieure.

4. Accessoire suivant la revendication 3, caractérisé en ce que la pièce de modulation (16A) intérieure s'étend aussi circulairement sur 360° autour de l'axe de rotation relatif (A) de l'ensemble.

5. Accessoire suivant l'une quelconque des revendications 3, 4, caractérisé en ce que, en bordure d'une au moins de ses ouvertures (20A1, 20A2 etc...) la paroi latérale (19A) de la pièce de modulation (16A) intérieure comporte localement au moins une portion sécable (26).

6. Accessoire suivant l'une quelconque des revendications 3 à 5, caractérisé en ce que, le long des bords latéraux de l'ouverture (20A1, 20A2 etc...), la pièce de modulation (16A) intérieure présente des nervures de raidissement (30) en saillie sur sa surface interne.

7. Accessoire suivant l'une quelconque des revendications 3 à 6, caractérisé en ce que, par sa surface externe, la pièce de modulation (16A) intérieure est au moins localement au contact de la surface interne de la pièce de modulation (16B) extérieure.

8. Accessoire suivant la revendication 7, caractérisé en ce que, par sa surface externe, la pièce de modulation (16A) intérieure est en tout point au contact de la surface interne de la pièce de modulation (16B) extérieure.

9. Accessoire suivant l'une quelconque des revendications 3 à 8, caractérisé en ce qu'il est prévu, entre les deux pièces de modulation (16A, 16B), des moyens d'assujettissement débrayables, en sorte qu'elles forment conjointement un sous-ensemble unitaire (31).

10. Accessoire suivant la revendication 9, caractérisé en ce que lesdits moyens d'assujettissement débrayables sont des moyens d'encliquetage.

11. Accessoire suivant la revendication 10, caractérisé en ce que lesdits moyens d'encliquetage comportent, sur la pièce de modulation (16B) extérieure, au moins deux pattes élastiquement déformables (32), qui, issues chacune d'une racine (33) éloignée de la paroi frontale (18B), sont dirigées vers celle-ci, et dont la tranche d'extrémité (34) est à une distance (d) de cette paroi frontale (18B) sensiblement égale à l'épaisseur (e) de la paroi frontale (18A) de la pièce de modulation (16A) intérieure, pour engagement de celle-ci sous ces pattes élastiquement déformables (32).

12. Accessoire suivant la revendication 11, caractérisé en ce que chacune des pattes élastiquement déformables (32) de la pièce de modulation (16B) extérieure appartient à un jambage (35) que présente cette pièce de modulation (16B) extérieure en bordure de l'ouverture circulaire (23B) de sa paroi frontale (18B), ledit jambage (35) s'étendant parallèlement à l'axe de rotation relatif (A) de l'ensemble et présentant une saignée en U (38) à la faveur de laquelle est isolée la patte élastiquement déformable (32) qu'il forme.

13. Accessoire suivant l'une quelconque des revendications 2 à 12, caractérisé en ce qu'il est prévu, entre les deux pièces de modulation (16A, 16B), des moyens d'indexation angulaire.

14. Accessoire suivant l'une quelconque des revendications 3 à 13, caractérisé en ce que la paroi frontale (18A, 18B) des deux pièces de modulation (16A, 16B) est plate.

15. Accessoire suivant l'une quelconque des revendications 3 à 14, caractérisé en ce que la paroi latérale (19A, 19B) des deux pièces de modulation (16A, 16B) est globalement tronconique.

16. Accessoire suivant l'une quelconque des revendications 3 à 15, caractérisé en ce qu'il est associé, aux deux pièces de modulation (16A, 16B), une platine de fixation (44), qui est apte à pouvoir être rapportée sur un support (12), et sur laquelle la pièce de modulation (16B) extérieure est elle-même apte à être rapportée de manière amovible.

17. Accessoire suivant la revendication 16, caractérisé en ce qu'il est prévu, entre la pièce de modulation (16B) extérieure et la platine de fixation (44), des moyens d'encliquetage.

18. Accessoire suivant la revendication 16, caractérisé en ce que lesdits moyens d'encliquetage comportent, sur la pièce de modulation (16B) extérieure, au moins deux crans (46), et, sur la platine de fixation (44), un nombre égal de crans (47) aptes à coopérer en accrochage avec les précédents.

19. Accessoire suivant les revendications 12 et 18, prises conjointement, caractérisé en ce que les crans (46) de la pièce de modulation (16B) extérieure font saillie sur la surface externe de ses jambages (35).

20. Accessoire suivant l'une quelconque des revendications 16 à 19, caractérisé en ce que la platine de fixation (44) présente, localement, à sa périphérie, une portion prédécoupée (53), qui, par des saignées (54) parallèles, le long d'un au moins de ses bords latéraux, est modulable en largeur.

21. Accessoire suivant l'une quelconque des revendications 16 à 20, caractérisé en ce que, à sa périphérie, la platine de fixation (44) est entièrement circonscrite par les pièces de modulation (16A, 16B).

22. Accessoire suivant l'une quelconque des revendications 3 à 21, caractérisé en ce qu'il est associé, aux deux pièces de modulation (16A, 16B), un obturateur (24), qui est apte à être rapporté sur la pièce de modulation (16B) extérieure, à la faveur de l'ouverture circulaire (23B) de la paroi frontale (18B) de celui-ci, et qui présente lui-même une ouverture (25) dans sa zone centrale.

## Patentansprüche

1. Verfahren zum Modulieren der Größe einer Zugangsöffnung an einem Zubehör für einen Elektrokanal und auf diese Weise zum Anpassen dieser Zugangsöffnung an die Abmessungen eines solchen Elektrokanals, dadurch gekennzeichnet, daß es darin besteht, daß an diesem Zubehör (10) mindestens zwei Teile (16A, 16B), der Einfachheit halber Modulationsteile genannt, vorgesehen werden, die ineinandergesteckt werden, in Bezug aufeinander um eine Relativdrehachse (A) drehbar montiert werden und jeweils im wesentlichen ergänzend einerseits eine Frontwand (18A, 18B), die sich zur Relativdrehachse (A) im wesentlichen quer erstreckt, und andererseits eine Seitenwand (19A, 19B) aufweisen, die global mit der Frontwand (18A, 18B) einen Winkel bildet, wobei die gewünschte Zugangsöffnung (20) sich aus der Überlagerung einer Öffnung (20A1, 20A2 usw.) auf der Seitenwand des inneren Modulationsteils (16A) mit einer Öffnung (20B) auf der Seitenwand des äußeren Modulationsteils (16B) ergibt.

2. Zubehör für Elektrokanal, das mindestens zwei Teile (16A, 16B), der Einfachheit halber Modulationsteile genannt, aufweist, die ineinandergesteckt sind und in Bezug aufeinander um eine Relativdrehachse (A) drehbar montiert sind, wobei jedes dieser Modulationsteile (16A, 16B) im wesentlichen ergänzend einerseits eine Frontwand (18A, 18B), die sich zu ihrer Relativdrehachse (A) im wesentlichen quer erstreckt, und andererseits eine Seitenwand (19A, 19B) aufweist, die global mit der Frontwand (18A, 18B) einen Winkel bildet, dadurch gekennzeichnet, daß die Seitenwand (19A) des inneren Modulationsteils (16A) mindestens eine Öffnung (20A1, 20A2 usw.) und die Seitenwand (19B) des äußeren Modulationsteils (16B) eine Öffnung (20B) aufweist, die einer Öffnung (20A1, 20A2 usw.) der Seitenwand (19A) des inneren Modulationsteils (16A) zu überlagern ist, um global mindestens eine Zugangsöffnung (20) für die Einführung eines Elektrokanals (11) abzugrenzen, und daß die Seitenwände (19A, 19B) der beiden Modulationsteile (16A, 16B) sich beide von ihren Frontwänden (18A, 18B) aus in derselben Richtung erstrecken und die Zugangsöffnung (20), die diese beiden Modulationsteile (16A, 16B) abgrenzen, sich axial bis zur Kante ihrer Seitenwände (19A, 19B) erstreckt.

3. Zubehör nach Anspruch 2, dadurch gekennzeichnet, daß im Fall eines Abdeckgehäuses für die Befestigung eines elektrischen Geräts die Frontwand (18A, 18B) des einen und des anderen der Modulationsteile (16A, 16B) eine kreisförmige Öffnung (23A, 23B) aufweist, ihre Seitenwand (19A, 19B) sich an jeder Stelle in einem Abstand von ihrer Relativdrehachse (A) erstreckt, mindestens das äußere Modulationsteil (16B) sich kreismäßig über 360° um diese Relativdrehachse (A) erstreckt, die Öffnungen (20A1, 20A2 usw.) der Seitenwand (19A) des inneren Modulationsteils (16A) kreismäßig verteilt sind und von verschiedenen Abmessungen sind und die Seitenwand (19B) des äußeren Modulationsteils (16B) nur eine Öffnung (20B) aufweist, deren Abmessungen im wesentlichen mindestens gleich denen der größten Öffnung (20A1, 20A2 usw.) der Seitenwand (19A) des inneren Modulationsteils (16A) sind.

4. Zubehör nach Anspruch 3, dadurch gekennzeichnet, daß das innere Modulationsteil (16A) sich ebenfalls kreismäßig über 360° um die Relativdrehachse (A) der Einheit erstreckt.

5. Zubehör nach einem der Ansprüche 3, 4, dadurch gekennzeichnet, daß die Seitenwand (19A) des inneren Modulationsteils (16A) am Rand mindestens einer seiner Öffnungen (20A1, 20A2 usw.) örtlich mindestens einen abstrennbaren Teil (26) aufweist.

6. Zubehör nach einem der Ansprüche 3 bis 5, dadurch gekennzeichnet, daß das innere Modulationsteil (16A) längs der Seitenränder der Öffnung (20A1, 20A2 usw.) Versteifungsrippen (30) aufweist, die auf seiner Innenseite vorstehen.

7. Zubehör nach einem der Ansprüche 3 bis 6, dadurch gekennzeichnet, daß das innere Modulationsteil (16A) mit seiner Außenfläche mindestens örtlich mit der Innenfläche des äußeren Modulationsteils (16B) in Kontakt ist.

8. Zubehör nach Anspruch 7, dadurch gekennzeichnet, daß das innere Modulationsteil (16A) mit seiner Außenfläche an jeder Stelle mit der Innenfläche des äußeren Modulationsteils (16B) in Kontakt ist.

9. Zubehör nach einem der Ansprüche 3 bis 8, dadurch gekennzeichnet, daß zwischen den beiden Modulationsteilen (16A, 16B) auskuppelbare Befestigungsmittel vorgesehen sind, so daß sie zusammen eine einheitliche Untergruppe (31) bilden.

10. Zubehör nach Anspruch 9, dadurch gekennzeichnet, daß diese auskuppelbaren Befestigungsmittel Einrastmittel sind.

11. Zubehör nach Anspruch 10, dadurch gekennzeichnet, daß diese Einrastmittel auf dem äußeren Modulationsteil (16B) mindestens zwei elastisch verformbare Zungen (32) aufweisen, die jeweils von einer von der Frontwand (18B) entfernten Wurzel (33) ausgehen und auf diese zu gerichtet sind und deren Endkante (34) sich in einem Abstand (d) von dieser Frontwand (18B) befindet, die im wesentlichen gleich der Dicke (e) der Frontwand (18A) des inneren Modulationsteils (16A) ist, so daß diese unter diese elastisch verformbaren Zungen (32) eingeführt werden kann.

12. Zubehör nach Anspruch 11, dadurch gekennzeichnet, daß jede der elastisch verformbaren Zungen (32) des äußeren Modulationsteils (16B) zu einem Fuß (35) gehört, den dieses äußere Modulationsteil (16B) am Rand der kreisförmigen Öffnung (23B) seiner Frontwand (18B) aufweist, wobei dieser Fuß (35) sich parallel zur Relativdrehachse (A) der Einheit erstreckt und einen U-förmigen Einschnitt (38) aufweist, durch den die von ihm gebildete elastisch verformbare Zunge (32) abgetrennt wird.

13. Zubehör nach einem der Ansprüche 2 bis 12, dadurch gekennzeichnet, daß zwischen den beiden Modulationsteilen (16A, 16B) Winkeleinrastmittel vorgesehen sind.

14. Zubehör nach einem der Ansprüche 3 bis 13, dadurch gekennzeichnet, daß die Frontwand (18A, 18B) der beiden Modulationsteile (16A, 16B) eben ist.

15. Zubehör nach einem der Ansprüche 3 bis 14, dadurch gekennzeichnet, daß die Seitenwand (19A, 19B) der beiden Modulationsteile (16A, 16B) insgesamt kegelstumpfförmig ist.

16. Zubehör nach einem der Ansprüche 3 bis 15, dadurch gekennzeichnet, daß den beiden Modulationsteile (16A, 16B) eine Befestigungsplatte (44) zugeordnet ist, die auf einem Träger (12) angebracht werden kann und auf der das äußere Modulationsteil (16B) seinerseits lösbar angebracht werden kann.

17. Zubehör nach Anspruch 16, dadurch gekennzeichnet, daß zwischen dem äußeren Modulationsteil (16B) und der Befestigungsplatte (44) Einrastmittel vorgesehen sind.

18. Zubehör nach Anspruch 16, dadurch gekennzeichnet, daß diese Einrastmittel auf dem äußeren Modulationsteil (16B) mindestens zwei Klinken (46) und auf der Befestigungsplatte (44) eine gleiche Anzahl von Klinken (47) aufweisen, die sich mit den vorhergehenden Klinken verhaken können.

19. Zubehör nach den Ansprüche 12 und 18 zusammen, dadurch gekennzeichnet, daß die Vorsprünge (46) des äußeren Modulationsteils (16B) auf der Außenfläche seiner Füße (35) vorstehen.

20. Zubehör nach einem der Ansprüche 16 bis 19, dadurch gekennzeichnet, daß die Befestigungsplatte (44) örtlich auf ihrem Umfang einen vorgestanzten Teil (53) aufweist, der mittels paralleler Nuten (54) längs mindestens eines seiner Seitenränder in der Breite modulierbar ist.

21. Zubehör nach einem der Ansprüche 16 bis 20, dadurch gekennzeichnet, daß die Befestigungsplatte (44) auf ihrem Umfang von den Modulationsteilen (16A, 16B) ganz umschrieben wird.

22. Zubehör nach einem der Ansprüche 3 bis 21, dadurch gekennzeichnet, daß den beiden Modulationsteilen (16A, 16B) ein Verschlußelement (24) zugeordnet ist, das an dem äußeren Modulationsteil (16B) in einer kreisförmigen Öffnung (23B) seiner Frontwand (18B) angebracht werden kann und das seinerseits in seinem mittleren Bereich eine Öffnung (25) aufweist.

## Claims

1. A process for modulating the amplitude of an access opening on an accessory for electrical ducting and thus adjusting said access opening to the dimensions of such an electrical ducting, characterised in that it comprises providing on said accessory (10) at least two parts (16A, 16B), referred to herein for the sake of convenience as modulation parts, which, being engaged one to the other and being mounted rotatably one relative to the other about a relative axis of rotation (A), each comprise in substantially complementary relationship on the one hand a front wall (18A, 18B) which extends substantially transversely with respect to the relative axis of rotation (A) and on the other hand a side wall (19A, 19B) which is generally at an angle to the front wall (18A, 18B), the required access opening (20) resulting from the superpositioning of an opening (20A1, 20A2 etc ...) on the side wall of the internal modulation part (16A) with an opening (20B) on the side wall of the external modulation part (16B).

2. An accessory for electrical ducting of the kind comprising at least two parts (16A, 16B), referred to herein for the sake of convenience as modulation parts, which are engaged one into the other and which are mounted rotatably one with respect to the other about a relative axis of rotation (A), each of said two modulation parts (16A, 16B) comprising in substantially complementary relationship on the one hand a front wall (18A), 18B) which extends substantially transversely with respect to their relative axis of rotation (A) and on the other hand a side wall (19A, 19B) which is generally at an angle to the front wall (18A, 18B), characterised in that, the side wall (19A) of the internal modulation part (16A) comprising at least one opening (20A1, 20A2 etc...)and the side wall (19B) of the external modulation part (16B) comprising an opening (20B) which is to be disposed in superposed relationship with an opening (20A1, 20A2 etc...) of the side wall (19A) of the internal modulation part (16A) to define generally at least one access opening (20) for the engagement of an electrical ducting (11), the side walls (19A, 19B) of the two modulation parts (16A, 16B) both extend in the same direction from their front walls (18A, 18B) and the access opening (20) which is defined by said two modulation parts (16A, 16B) extends axially to the edge of their said side walls (19A, 19B).

3. An accessory according to claim 2 characterised in that, being a covering box for the fixing of an item of electrical equipment, the front wall (18A, 18B) of each of the modulation parts (16A, 16B) comprises a circular opening (23A, 23B), their side wall (19A, 19B) extends at every point at a spacing from their relative axis of rotation (A), the external modulation part (16B) at least extends in a circular configuration over 360° around said relative axis of rotation (A), the openings (20A1, 20A2 etc ...) of the side wall (19A) of the internal modulation part (16A) are distributed circularly and are of different dimensions, and the side wall (19B) of the external modulation part (16B) comprises only a single opening (20B) of dimensions which overall are at least equal to those of the opening (20A1, 20A2 etc ...) of largest dimensions in the side wall (19A) of the internal modulation part (16A).

4. An accessory according to claim 3 characterised in that the internal modulation part (16A) also extends circularly over 360° around the relative axis of rotation (A) of the assembly.

5. An accessory according to either one of claims 3 and 4 characterised in that, at the edge of one at least of its openings (20A1, 20A2 etc...) the side wall (19A) of the internal modulation part (16A) locally comprises at least one portion (26) which can be cut out.

6. An accessory according to any one of claims 3 to 5 characterised in that, along the side edges of the opening (20A1, 20A2 etc ...), the internal modulation part (16A) has stiffening ribs (30) in projecting relationship on its internal surface.

7. An accessory according to any one of claims 3 to 6 characterised in that, by means of its external surface, the internal modulation part (16A) is at least locally in contact with the internal surface of the external modulation part (16B).

8. An accessory according to claim 7 characterised in that, by means of its external surface, the internal modulation part (16A) is in contact at every point with the internal surface of the external modulation part (16B).

9. An accessory according to any one of claims 3 to 8 characterised in that provided between the two modulation parts (16A, 16B) are disengageable fastening means such that they jointly form a unitary subassembly (31).

10. An accessory according to claim 9 characterised in that said disengageable fastening means are latching means.

11. An accessory according to claim 10 characterised in that said latching means comprise, on the external modulation part (16B), at least two elastically deformable lugs (32) which, each starting from a root portion (33) which is remote from the front wall (18B), are directed towards same, and the end edge (34) of which is at a spacing (d) from said front wall (18B), that is substantially equal to the thickness (e) of the front wall (18A) of the internal modulation part (16A) for engagement thereof under said elastically deformable lugs (32).

12. An accessory according to claim 11 characterised in that each of the elastically deformable lugs (32) of the external modulation part (16B) belongs to a leg portion (35) provided on said external modulation part (16B) at the edge of the circular opening (23B) in its front wall (18B), said leg portion (35) extending parallel to the relative axis of rotation (A) of the assembly and having a U-shaped slot (38), by means of which the elastically deformable lug (32) that the leg portion forms is isolated.

13. An accessory according to any one of claims 2 to 12 characterised in that angular indexing means are provided between the two modulation parts (16A, 16B).

14. An accessory according to any one of claims 3 to 13 characterised in that the front wall (18A, 18B) of the two modulation parts (16A, 16B) is flat.

15. An accessory according to any one of claims 3 to 14 characterised in that the side wall (19A, 19B) of the two modulation parts (16A, 16B) is generally frustoconical.

16. An accessory according to any one of claims 3 to 15 characterised in that associated with the two modulation parts (16A, 16B) is a fixing plate portion (44) which is adapted to be capable of being fitted to a support (12) and to which the external modulation part (16B) is itself adapted to be removably fitted.

17. An accessory according to claim 16 characterised in that latching means are provided between the external modulation part (16B) and the fixing plate portion (44).

18. An accessory according to claim 16 characterised in that said latching means comprise on the external modulation part (16B) at least two catch portions (46) and on the fixing plate portion (44) an equal number of catch portions (47) adapted to co-operate in hooking relationship with the previous catch portions.

19. An accessory according to claims 12 and 18 in combination characterised in that the catch portions (46) of the external modulation part (16B) project from the external surface of its leg portions (35).

20. An accessory according to any one of claims 16 to 19 characterised in that the fixing plate portion (44) locally has at its periphery a pre-cut-out portion (53) which is modulatable in respect of width by means of parallel grooves (54) along one at least of its lateral edges.

21. An accessory according to any one of claims 16 to 20 characterised in that at its periphery the fixing plate portion (44) is entirely circumscribed by the modulation parts (16A, 16B).

22. An accessory according to any one of claims 3 to 21 characterised in that associated with the modulation parts (16A, 16B) is a closure member (24) which is adapted to be fitted to the external modulation part (16B), by means of the circular opening (23B) in the front wall (18B) thereof, and which itself has an opening (25) in its central zone.
